# EUROPEAN PATENT APPLICATION

(11) **EP 1 234 507 A1**
(43) Date of publication of application: **28.08.2002**
(21) Application number: 01200710.0
(22) Date of filing: 26.02.2001
(51) Int. Cl.: A23J 1/20, A23C 9/146

(54) **Process for isolating beta-lactoglobulin from milk or milk fractions**

(71) Applicant: Wageningen Centre for Food Sciences, 6700 AN Wageningen (NL)
(72) Inventor: De Jongh, Harmen Henri Jacobus, 3705 LG Zeist (NL); De Groot, Jolanda, 6708 BG Wageningen (NL)
(74) Representative: Jorritsma, Ruurd

(57) **Abstract**

The present invention is concerned with a process for isolating undenatured β-lactoglobulin from milk or milk fractions, said process comprising the following steps:
h) removing milk fat by a physical separation method;
i) removing casein through precipitation at pH 4.2 to pH 4.8;
j) adjusting the pH of the milk or milk fraction to a pH between 6.9 and 7.5;
k)diluting with essentially ion-free water to a conductivity of less than x mS at t°C,
   where x = 5 + 0.15*t ;
l) allowing the β-lactoglobulin to bind reversibly to an anion exchange material;
m) separating the bound β-lactoglobulin from the supernatant;
n) liberating the β-lactoglobulin from the anion exchange material by rinsing with a dilute salt solution;
whilst ensuring that during each of the aforementioned process steps the pH remains between 4.2 and 7.5 and the temperature between 0 and 35°C. The process according to the invention enables the isolation of β-lactoglobulin from said milk or milk fractions in essentially undenatured form

In another embodiment the present invention is concerned with a dairy isolate containing at least 2.0 wt.% undenatured β-lactoglobulin, wherein the isolate contains, in combination, less than 3 wt.% of irreversible β-lactoglobulin dimers and/or milk proteins other than β-lactoglobulin, calculated on pure β-lactoglobulin.

## Description

The present invention relates to a process for isolating β-lactoglobulin from milk or milk fractions, said process including removal of milk fat and casein, and a separation step involving the use of an anion exchange material. The invention is also directed to a dairy isolate containing at least 0.5 wt.% undenatured β-lactoglobulin.

β-lactoglobulin is a protein which is found in the milk of ruminants together with a number of other milk proteins such as casein, immunoglobulins, α-lactalbumin, lactoferrin and blood serum albumin. When dissolved in sufficienlty high concentration in water, β-lactoglobulin is capable of forming gels. This capability makes β-lactoglobulin an interesting additive for e.g. food products and pharmaceutical products.

Several processes for the separation of β-lactoglobulin from milk and milk fractions have been described in the prior art. Most of these processes start from whey or a whey concentrate and apply one or more separation techniques based on selective precipitation, membrane separation based on differences in size, and/or selective adsorption.

US 5,420,249 (De Wit et al.) describes a process for recovering α-lactalbumin and β-lactoglobulin enriched whey protein concentrate from a whey protein product. The process comprises the steps of incubating a solution of the whey protein product with a calcium-binding ionic exchange resin, adjusting the pH to between 4.3 and 4.8 after separation of said resin, incubating at between 10° and 50°C to promote flocculation of α-lactalbumin, and fractionating at pH 4.3-4.8 to produce an α-lactalbumin enriched fraction and a β-lactoglobulin enriched fraction. It is described in this disclosure to remove the fat from the initial whey protein product prior to incubation with the ionic exchange resin.

US 5,747,647 (Stack et al.) relates to a process for the recovery of whey constituents, comprisng the steps of reducing the calcium content of whey to below 120 p.p.m. on a dry matter basis, reducing the pH to between 1.8 and 3.4, heating to between 71° and 98°C for 50-95 seconds, followed by concentrating to between 55% and 63% total solids, cooling and separation of of lactose crystals, adjusting pH to between 4.3 and 4.7 and heating to between 35° and 54°C, separating the resultant flocculant comprising enriched α-lactalbumin from the liquor comprising substantially pure β-lactoglobulin.

US 5,756,680 (Ahmed et al.) is concerned with a method for sequential separation of whey proteins, including β-lactoglobulin, using radial-flow chromatography. Different buffer systems adjusted to suitable pH and ionic strength are utilised in the separation process. The conditions described for the separation of β-lactoglobulin from whey use a pH of 8.0.

US 5,986,063 (Etzel) relates to a method for isolating β-lactoglobulin and α-lactalbumin from whey with a single cation exchanger, using different pH values for eluting the proteins as separate fractions, without using salt elution. The method described involves adjusting a whey protein solution to a pH of less than about 4.5, contacting with a cation exchanger to obtain a bound fraction containing α-lactalbumin and β-lactoglobulin, adjusting the pH to between 4.0 and 6.0 and eluting a β-lactoglobulin fraction, followed by adjusting the pH to 6.5 or higher to elute the α-lactalbumin fraction. The method is said to be advantageously conducted at elevated temperatures ranging from 35° to 50°C.

None of the above mentioned references disclose processes that apply sufficiently mild conditions to avoid significant denaturation of β-lactoglobulin. The temperature, pH and/or ionic strength conditions reported in these references will inevitably lead to partial denaturation of said protein.

The present invention is concerned with a process for isolating for isolating β-lactoglobulin from milk or milk fractions wherein the β-lactoglobulin present in said milk or milk fractions is obtained therefrom in essentially undenatured form. Thus, more specifically the present invention relates to a process for isolating undenatured β-lactoglobulin from milk or milk fractions, said process comprising the following steps:
a) removing milk fat by a physical separation method;
b) removing casein through precipitation at pH 4.2 to pH 4.8;
c) adjusting the pH of the milk or milk fraction to a pH between 6.9 and 7.5;
d) diluting with essentially ion-free water to a conductivity of less than x mS at t°C, where x = 5 + 0.15*t ;
e) allowing the β-lactoglobulin to bind reversibly to an anion exchange material;
f) separating the bound β-lactoglobulin from the supernatant;
g) liberating the β-lactoglobulin from the anion exchange material by rinsing with a dilute salt solution;
whilst ensuring that during each of the aforementioned process steps the pH remains between 4.2 and 7.5 and the temperature between 0 and 35°C.

Although the present process can use as a starting material a variety of milk or milk fractions such as full fat milk, skim milk, butter milk, whey or fractions of these dairy products, it is preferred to use full fat milk as a starting material. It is noted that the material obtained after step a) can suitably be skim milk or butter milk. Similarly the combined result of steps a) and b) may be whey or a whey fraction. As used herein, the term "whey" refers to the aqueous part of milk that is separated from the curds in the process of making cheese. "Whey fractions" refers to a part of the whey comprising all or some of the whey proteins. Whey is typically composed of about 5 wt. % lactose, 1 wt. % protein and about 0.5 wt. % salts, where the balance of the mixture is water.

In the present process, steps a) and b) can suitably be combined so as to produce, for example, whey in a single process step. Steps e) en f) can similarly be combined by , for instance, passing a β-lactoglobulin containing solution through a column filled with immobilised anion exchange material. The process steps according to the invention are executed in alphabetical order with the possible exception of the aforementioned steps, that is, in case these are carried out simultaneously in a single process step.

Since it is an objective of the present invention to recover β-lactoglobulin in undenatured form, preferably, the milk or milk fractions used in the present process have not been sterlilised, more preferably they have not been pasteurised, most preferably they have not been subjected to temperatures of more than 35°C since they were obtained from milking.

Milk fat can be removed from the milk or milk fractions by any suitable methods well-known in the dairy industry. Such methods usually are carried out at reduced temperatures and involve, for instance, centrifugation and/or churning.

It is an important aspect of the current process that casein is removed prior to bringing the β-lactoglobulin in contact with the anion exchange material. In a preferred embodiment of the invention the casein is precipitated by adding an aqueous solution of one or more acids selected from the group consisting of hydrochloric acid, sulphuric acid, formic acid and acetic acid. Following the precipitation of the casein the pH is increased again. This is preferably achieved by adding an aqueous solution of one or more bases selected from the group consisting of sodium hydroxide and potassium hydroxide. In another preferred embodiment of the present invention, during the aforementioned process steps, the ionic strength remains between 0.05 and 0.30M, preferably between 0.1 and 0.25M. The term "ionic strength" as used throughout this application is defined as I = 1/2 * * Σᵢ mᵢzᵢ² where mᵢ and zᵢ are the molality and the charge of the i-th ion in the electrolyte. It is advantageous to maintain the ionic strength at a relatively low level as affinity of the anion exchange material for β-lactoglobulin under such conditions will be high and also because it will favour selective binding of β-lactoglobulin to the anion exchange material. Operating at a very low ionic strength, e.g. below 0.05M is not particularly practical because under such conditions other proteins, particularly α-lactalbumin and blood serum albumine will bind to the anion exchange material.
In the process according to the present invention anion exchange materials well-known in the art can be used, provided they are capable of reversibly binding negatively charged β-lactoglobulin molecules in an aqueous solution at a pH between 6.9 and 7.5. A test which can be used to determine whether an anion exchange material is suitable for the present process is to fill a column with a volume of 60 ml and a diameter of less than 2 cm with said material. Subsequently an aqueous solution of β-lactoglobulin is applied on top of the column, and the β-lactoglobulin is allowed to bind to the anion exchange material. The aqueous solution of β-lactoglobulin is obtained by dissolving 2.2 grammes of pure β-lactoglobulin in 40 ml of 10 mM phosphate-buffer pH 7.0 (HCl), which aqueous solution is set to an ionic strength of 0.050 mM using sodium chloride. Next the column is rinsed with 3 column-volumes of the above mentioned buffer and no protein should elute, as checked for example by the absorbance of the eluent at 280 nm. Upon rising the column subsequently with 90 ml of the above mentioned buffers, but now having an ionic strength between 0.1 and 0.2 M (using sodium chloride), at least 90% of the β-lactoglobulin should be released from the column in this 90 ml volume.

The anion exchange materials can be used per se, but also in combination. It is noted that the present process encompasses both a process wherein the anion exchange material is added to a β-lactoglobulin containing solution after which it is removed from the supernatant by a physical separation process such as filtration, centrifugation and/or decanting, as well as a so called chromatography process wherein the anion exchange material has been immobilised and the β-lactoglobulin containing solution is passed over or through said immobilised material and collected separately.

Suitable anion exchange materials may be prepared by conventional techniques known to those of ordinary skill in the art. For example a suitable anion exchange material may be produced from a mixture of polymerisable monofunctional and polyfunctional monomer by radical emulsion polymerization techniques, then functionalised with strongly basic groups such as quaternary ammonium groups. According to a preferred embodiment of the invention, the anion exchange material is selected from the group consisting of chromatography resins having a positively charged group selected from the group consisting of a quaternary amine and diethylaminoethyl

In case the anion exchange material is used in a chromatography-type separation step, it is preferred to use a cross-linked polymer. The degree of crosslinking in the anion exchange material, or resin, can be chosen, depending on the operating conditions of the anion exchange column. A suitable resin may have from 2 to 12% crosslinking. The particle size of the anion exchange resin is selected to allow for efficient flow of the β-lactoglobulin containing solution, while still effectively removing the negatively charged materials.

Examples of suitable anion exchange materials are: DEAE Sephadex, QAE Sephadex, DEAE Sepharose, Q Sepharose, DEAE Sephacel, DEAE Cellulose, PEI Cellulose, QAE Cellulose, Amberlite, Dowex 1-X2, Dowex 1-X4, Dowex 1-XS, Dowex 2-X8, Dowex Macroporous Resins, Dowex WGR-2, DEAE Trisacryl Plus-M, DEAE Trisacryl Plus-LS, Bio-Rex AG 1-X2, AG 1-X4, AG-1-XS, AG 2-X8, AG MP-1 Resin, AG 4-X4, AG 3-X4, Bio-Rex 5 andSpectra/Gel 1x2, 1x4, 1x8 resins.

The amount of anion exchange material used in the present process is determined largely by the amount of β-lactoglobulin present, and the time available for binding to the anion exchange material. Typically, the loading ratio of β-lactoglobulin to anion exchange resin is from 0.01 to 0.3, preferably from 0.04-0.2v/v. When contacting is affected in a column, the β-lactoglobulin containing solution is preferably passed at a rate from 0.1 to 20 cm/min, more preferably from 0.5 to 10 cm/min.

In order to liberate the β-lactoglobulin from the anion exchange material, it is necessary to create conditions such that the affinity between the two materials is decreased significantly, preferably in such a way that no denaturatoin of the β-lactoglobulin is induced. We have found that particularly good results are obtained as a result of application of a salt solution containing in total from 0.1 to 0.5M of one or more salts selected from the group consisting of sodium chloride, potassium chloride, potassium iodide and mixtures thereof.

Denaturation of the β-lactoglobulin will quickly occur at high and low pH values. This is why it is preferred to operate the process steps of the present process at a pH which remains between 4.3 and 7.3. For the same reasons these process steps are preferably conducted at a temperature that remains between 10 and 25°C.

An important advantage of the present process is that it enables high recovery yields of the β-lactoglobulin originally present in the milk of milk fractions. Yields of more than 60% of the quantity originally present in the milk are easily achieved. Also yields of 80% or more can advantageously be achieved with the process according to the invention.

The β-lactoglobulin isolates obtained by the present process may be applied as such in industrial texturiser applications. However, it is also possible to subject such isolates to further concentration methods so as to increase the level of β-lactoglobulin. Naturally these processes should be conducted under mild conditions so as to minimise subsequent denaturation of β-lactoglobulin and formation of undesired contaminants such as those described below. A suitable method for achieving further concentration is membrane filtration. By means of this technique concentrations of β-lactoglobulin in excess of 5 wt.% are easily achieved. Freeze drying is another concentration method that may suitably be applied, although it will usually lead to the loss of some of the desirable properties of the isolate. The same holds true, to a higher degree, for spray drying. Hence if spray drying is applied to further concentrate the isolate obtained by the present process, drying temperatures and residence time in the spray drying tower should be kept to the absolute minimum.

It is another objective of the present process to minimise the amount of proteose peptones present in the final isolate. Proteose peptone are protease digests of milk proteins, particularly of casein and are spontaneously formed in milk and milk fractions due to protease activity naturally occurring therein. Proteose peptones were found to have a great influence on the interfacial properties of the isolated material. In particular, when present in significant concentrations, proteose peptones will promote the formation of stable foams, which is highly undesirable in many applications. Formation of proteose peptones normally commences after milking and significant quantities of proteose peptones will usually start to form more than 24 hours after milking. This is why the current process is preferably started within 24 hours, more preferably within 12 hours after milking.

The present process allows the preparation of an isolate containing β-lactoglobulin in essentially undenatured form and not comprising significant amounts of other milk proteins such as casein, immunoglobulins, α-lactalbumin, lactoferrin and blood serum albumin and/or. unwanted contaminants like irreversible β-lactoglobulin dimers. Therefore another aspect of the current invention relates to a dairy isolate containing at least 2.0 wt.% undenatured β-lactoglobulin, wherein the isolate contains, in combination, less than 3 wt.% of irreversible β-lactoglobulin dimers and/or milk proteins other than β-lactoglobulin, calculated on pure β-lactoglobulin. Here by irreversible β-lactoglobulin dimers are meant β-lactoglobulin derived proteins that cannot be dissociated in the presence of 1 wt.% sodium dodecylsulfate and 40 mM β-mercaptoethanol or dithiotreitol after boiling the sample for at least 15 minutes.

The present isolates are clearly different form those disclosed in the prior art in that they contain extremely low levels of blood serum albumin (BSA) and lactose. Typically the isolates according to the invention contain less than 0.5% blood serum albumin by weight of the β-lactoglobulin present in the isolate. Also the level of free lactose is generally below 0.5% by weight of β-lactoglobulin.

In isolates according to the present invention the presence of appreciable amounts of milk proteins other than pure, undenatured β-lactoglobulin is highly unwanted as these other proteins will affect the functionality of the isolate, particularly its gelling characteristics. The gel and gelation characteristics of the present isolate, such as gelation rate, gel strength and gel loss modulus are all influenced by the presence of minor amounts of other proteins. Another problem associated with the presence of substantial levels of proteinaceous contaminants is that the levels at which the individual contaminants occur are not reproducible. As a result undesirably high batch-to-batch fluctuations are observed for isolates containing significant levels of such contaminants.Hence in a preferred embodiment of the invention the isolate contains even less than 1.5 wt.% of irreversible β-lactoglobulin dimers and/or milk proteins other than β-lactoglobulin, calculated on pure β-lactoglobulin.

It was found that many β-lactoglobulin preparations according to the prior art normally contain significant levels of proteose peptones (typically about 0.5wt.% calculated on β-lactoglobulin). As described above, proteose peptones will promote the formation of stable foams which is an unwanted phenomenon in many applications. Hence, in a preferred embodiment of the invention, the isolate contains less than 0.1 wt.%, more preferably less than 0.02 wt.% proteose peptones, calculated on pure β-lactoglobulin.

Another undesirable component often found in the β-lactoglobulin preparations according to the prior art is lactosylated β-lactoglobulin. Lactolysated β-lactoglobulin is formed spontaneously in milk products such as whey as a result of β-lactoglobulin reacting with lactose. In particular at elevated temperatures (above 35°C), formation of lactosylated β-lactoglobulin will occur at relatively high rates. We have found that in isolates according to the prior often up to 50% of the proteins contained therein have been lactosylated, i.e. contain at least 1 lactose moiety. In the isolate according to the present invention typically less than 2% of the proteins present are lactosolyated. Therefore, the present isolate preferably contains less than 2%, more preferably less than 1% lactosylated protein, calculated on total protein content.

An important objective of the current invention is to provide a dairy isolate in which the β-lactoglobulin is essentially undenatured. The special process according to the present invention has enabled the isolation of β-lactoglobulin in a truly undenatured form. It was discovered that in addition to the known heat induced thermodynamic transitions of β-lactoglobulin which occur at around 77°C (unfolding at secondary level), 72°C (unfolding at tertiary level) and 52°C (dimer-monomer dissociaton), there is another low temperature transition which occurs at about 30°C. At the latter temperature certain β-stranded residues were found to unfold co-operatively. This low temperature transition was found to be irreversible at a temperature higher than 35°C, but surprisingly also upon freezing at -20°C or lower. The presence of significant levels of β-lactoglobulin that still display the low temperature transition is a unique characteristic of the isolates according to the present invention. Consequently, in a preferred embodiment, the β-lactoglobulin in the present isolate is essentially undenatured as demonstrated by the fact that it displays a transition within the temperature range of 25 and 40°C.

The transitions of β-lactoglobulin as referred to above can suitably be measured by means of differential scanning calorimetry, using an aqueous sample that typically contains about 4 mg/ml β-lactoglobulin, and by applying a heating regime that starts at 15°C, followed by a temperature increase of 1°C/minute until a temperature of 95 °C is reached. In order to establish whether or not a transition is reversible, the sample is subsequently cooled to 15 °C at 3 °C/min and reheated again to 95 °C at a rate of 1°C/min.

The invention is further illustrated by means of the following Examples

### Example 1

### Preparation of whey protein fraction from bovine milk

Fresh bovine milk, used within 12 hours after milking and directly cooled to 10 °C, was obtained from different cattle (Frisian Holland and Holstein Frisian) and was mixed to obtain a natural representation of the A and B zygote types. The milk was skimmed by centrifugation for 20 min at 10 °C and 6000 g (Beckman J2-MC, JA-10.5 rotor), and subsequent separation of fat was achieved by pouring the milk over glass wool. Next, the skimmed milk was carefully acidified to pH 4.4-4.5 using 2N HCl. The precipitated casein was removed by centrifugation for 30 min at 10 °C and 6000 g, and the supernatant was poured over glass wool. The pH of the acidic whey fraction was raised to pH 7.2 using 1N NaOH, and the material was subsequently centrifuged for 15 min at 10 °C and 12.000 g. The supernatant was filtered (Schleicher & Schuell 595 ½ (ref. No. 311653)) and this materials is referred to as whey protein fraction (WPF). Analysis of the whey fraction showed that it contained 12.5 wt.% protein, 80 wt.% lactose and 1.5 wt.% fat. The precipitated casein had a protein content of 94%, a lactoste content of 0.3 wt.% and a fat content of 3 wt.%.

### Isolation of β-lactoglobulin from whey protein fraction

The conductivity of the WPF was lowered to 6.7 mS (Philips PW9527 equipped with a PT-electrode Metrohm 6.0323.110), i.e. the same conductivity of a 0.1 M Tris/HCl (pH 7.2) buffer, by dilution with milli-Q water (approximately a dilution factor of 1.2). Typically, 77 g DEAE Sepharose-CL6B (Pharmacia), pre-washed with large excess of demineralised water, was added to 1 L of the diluted WPF, and stirred gently overnight at 4 °C (pH 7.2). Under these conditions β-lactoglobulin binds to the DEAE, whereas the apparent ionic strength prohibits other WPF proteins to bind. Next, the suspension was allowed to sediment and the supernatant was removed. (Note: this supernatant can ideally serve as starting material for an α-lactalbumin isolation). The DEAE was transferred to a glass filter, and the material was gently suspended in 250 ml 0.1 M Tris/HCl (Merck) at pH 7.2 and incubated for 15 min at 20 °C. The solvent was subsequently removed by reduced pressure. This washing step was repeated till the asborbance at 280 nm in a 1 cm cuvet of the 0.1 M Tris buffer was lower than 0.05 units. The β-lactoglobulin was eluted from the DEAE by washing the material with aliquots of 250 ml of a 0.25 M NaCl-solution in demineralised water, which was subsequently collected. This latter step was repeated till the absorbance at 280 nm in a 1 cm cuvet of the salt-containing solution with the eluted protein was lower than 0.1 units. All salt-solutions were combined and ultrafiltrated using a Millipor 1.5 L unit on ice with a 10 kDa molecular weight cut-off filter, pre-treated according to the manufacturers instructions (Millipor PM10). The final protein-concentration was approximately 20-40 mg/ml. The recovery yield of the β-lactoglobulin originally present in the milk, was calculated to be 85%.

### Differential Scanning Calorimetry

Differential scanning calorimetry was performed on a Micro-DSC III (Setaram, Caluire, France) using 0.9 ml vessels and a detection limit for transitions of minimal 84 µJ. g⁻¹.°C⁻¹. Typically 4 mg/ml β-lactoglobulin was heated from 15 to 95 °C with a heating rate of 1 °C /min, subsequently cooled to 15 °C with 3 °C/min and reheated again to 95 °C with a rate of 1 °Cmin to check the reversibility of the transitions.

The results of the β-lactoglobulin sample show a single endothermic transition (ΔH_{cal} = 20.0 ± 0.5 J/g) with an on-set temperature of 66 °C and a maximum at 73 °C. This transition reflects the global unfolding of the protein. The transition around 52 °C observed at a secondary folding level corresponds to the temperature for dimer-monomer dissociation. The nature of the transition around 32 °C is unknown and has not been reported thus far.

### Reversibility of temperature-induced conformational changes

To study the reversibility of the low temperature transition described above far-UV circular dichroism spectra of 0.4 mg/ml β-lactoglobulin in 20 mM phosphate-buffer (pH 7.0) were recorded from 15 to 95 °C (± 0.1) with 5 °C intervals as averages of 32 spectra in the range from 185-260 nm with a spectral resolution of 0.2 nm. The scan speed was 100 nm/min and the response time was 0.125 sec using a bandwidth of 1 nm. Quartz cells with an optical path of 0.1 cm were used. The spectra were corrected for the corresponding protein-free sample. Far-UV CD spectra were analyzed for the secondary structure content of the proteins using a non-linear least squares fitting procedure as described previously.

The far-UV CD spectra were recorded at 15 °C of a sample that had been incubated for 15 min at various temperatures between 15 and 55 °C. From 15 to 25 °C the protein does not undergo any conformational change, and consequently incubation at these temperatures does not affect the secondary structure content. Incubation of the protein at temperatures higher than the low temperature transition at 32 °C, does result in an irreversible conformational change.

To test whether freezing of the sample has any effect on this low temperature transition, a sample was stored for 1 hour at -20 °C, thawed again and its conformational changes were analyzed by far-UV CD spectroscopy. The estimated secondary structure content of this sample was identical to that of a sample incubated between 35-55 °C, lacking the low temperature transition. The irreversibility of this transition also by cold denaturation is most likely the reason why this transition has not been reported previously, since often the protein is freeze dried for storage or for concentration purposes

### Comparison with commercially available β-lactoglobulin isolates

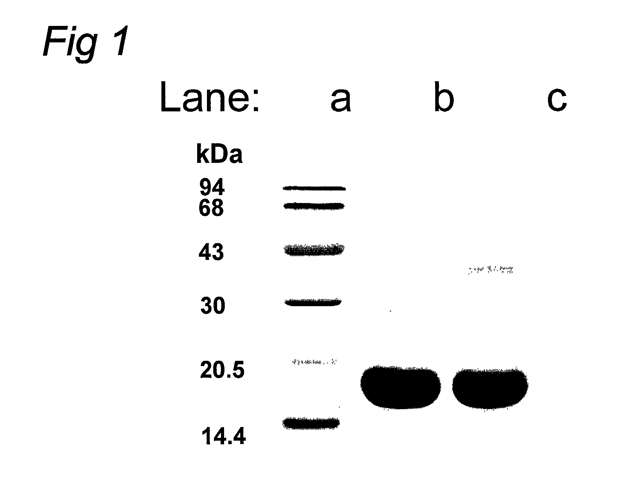

The isolate obtained from the process as described above was compared with a commercial sample of β-lactoglobulin ex SIGMA (cat. no.: L3908). Both samples were subjected to a sodium dodecylsulfate polyacrylamide gel electrophoretic analysis on a 15% gel under reducing conditions. The results of this analysis are shown in Figure 1. Lane b represents the sample obtained from the procedure according to the invention.. Lane a shows a number of molecular weight markers, whereas the results for the commercial β-lactoglobulin preparation are shown in lane c. From the results it is obvious that the commercial preparation contains significant levels of high molecular protein moieties which are absent in isolate obtained from the process according to the invention.

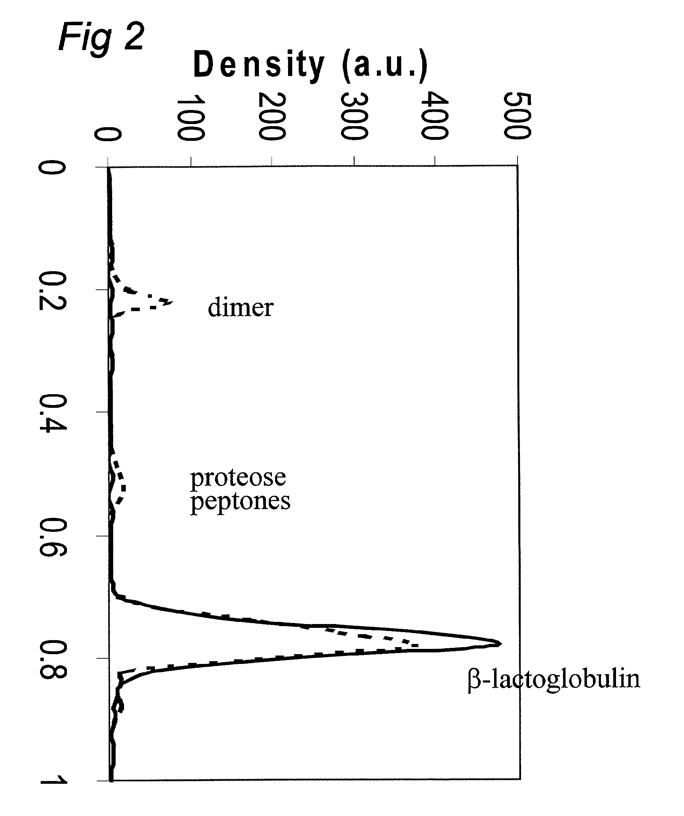

Figure 2 shows the densitometric analysis of the gel displayed in Figure 1. The solid line represents the isolate as obtained from the process described above. The dashed line represents the commercial β-lactoglobulin preparation. The position of the irreversible dimers and the proteose peptones are indicated in Figure 2. It is clear that the commercial sample contains significant levels of proteose peptones and irreversible -lactoglobulin dimer, whereas these components are essentially absent in the isolate obtained by the present process.

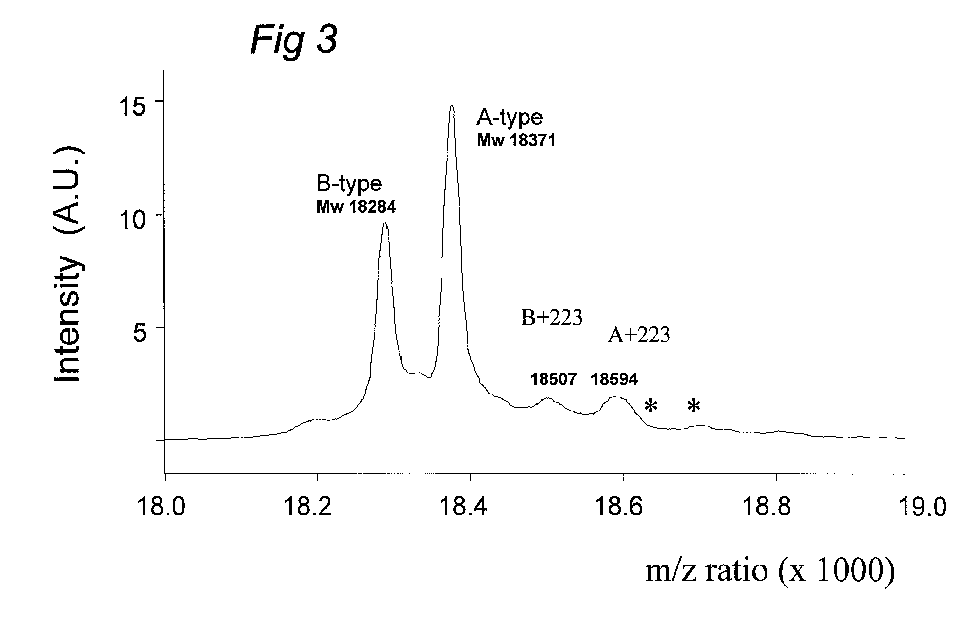

Figure 3 shows the matrix-assisted laser desorption ionization time-of-flight analysis of the β-lactoglobulin isolated obtained from the process described above. The genetic variants A and B are indicated, just like the bands arising from the A and B variant with a matrix-adduct (sinapinic acid (223 Da)). The asterisks reflect the positions where lactosylated β-lactoglobulin would appear (18,284 or 18,371 + n * 324 Da, with n the number of lactose units bound to the protein). The absence of peaks in the area marked with the asterisks, demonstrates that the isolate obtained by the process according to the invention contains no detectable amounts of lactosylated lactosylated β-lactoglobulin.

## Claims

1. Process for isolating undenatured β-lactoglobulin from milk or milk fractions, said process comprising the following steps:
a) removing milk fat by a physical separation method;
b)removing casein through precipitation at pH 4.2 to pH 4.8;
c) adjusting the pH of the milk or milk fraction to a pH between 6.9 and 7.5; d)diluting with essentially ion-free water to a conductivity of less than x mS at t°C, where x = 5 + 0.15*t;
e)allowing the β-lactoglobulin to bind reversibly to an anion exchange material;
f) separating the bound β-lactoglobulin from the supernatant;
g) liberating the β-lactoglobulin from the anion exchange material by rinsing with a dilute salt solution;
whilst ensuring that during each of the aforementioned process steps the pH remains between 4.2 and 7.5 and the temperature between 0 and 35°C.

2. Process according to claim 1, wherein during the aforementioned process steps the ionic strength remains between 0.05 and 0.30M, preferably between 0.1 and 0.25M.

3. Process according to claim 1 or 2, wherein the anion exchange material is selected from the group consisting of chromatography resins having a positively charged group selected from the group consisting of a quaternary amine and diethylaminoethyl.

4. Process according to any one of claims 1-3, wherein the casein is precipitated by adding an aqueous solution of one or more acids selected from the group consisting of hydrochloric acid, sulphuric acid, formic acid and acetic acid, and where in step c) the pH is adjusted by adding an aqueous solution of one or more bases selected from the group consisting of sodium hydroxide and potassium hydroxide.

5. Process according to any one of claims 1-4, wherein the salt solution contains in total from 0.1 to 0.5M of one or more salts selected from the group consisting of sodium chloride, potassium chloride, potassium iodide and mixtures thereof.

6. Process according to any one of claims 1-5, wherein during the process steps the pH remains between 4.3 and 7.3 and the temperature remains between 10 and 25°C.

7. Dairy isolate containing at least 2.0 wt.% undenatured β-lactoglobulin, wherein the isolate contains, in combination, less than 3 wt.% of irreversible β-lactoglobulin dimers and/or milk proteins other than β-lactoglobulin, calculated on pure β-lactoglobulin.

8. Dairy isolate according to claim 7, wherein the isolate contains less than 0.1 wt.% proteose peptones, calculated on pure β-lactoglobulin.

9. Dairy isolate according to claim 8, wherein the isolate contains less than 2% lactosylated protein, calculated on total protein content.

10. Dairy isolate according to any one of claims 7-9, wherein the β-lactoglobulin is essentially undenatured as demonstrated by the fact that it displays a transition within the temperature range of 25 and 40°C.
